# EUROPÄISCHE PATENTANMELDUNG

(11) **EP 4 524 056 A1**
(43) Veröffentlichungstag der Anmeldung: **19.03.2025**
(21) Anmeldenummer: 24195856.0
(22) Anmeldetag: 22.08.2024
(51) Int. Cl.: B65D 85/68, B60P 3/073

(54) **STÄNDERVORRICHTUNG ZUM HALTEN VON NUTZFAHRZEUGEN**

(30) Priorität: 05.09.2023 DE 102023123880
(71) Anmelder: Fahrzeugwerk Bernard Krone GmbH & Co. KG, 49757 Werlte (DE)
(72) Erfinder: Acar, Mustafa, 39500 Tire/Izmir (TR); Pek, Mehmet, 39500 Tire/Izmir (TR)
(74) Vertreter: Weeg, Thomas

(57) **Zusammenfassung**

Die Erfindung betrifft eine Ständervorrichtung zum Halten von zumindest zwei Nutzfahrzeugen. Die Ständervorrichtung weist ein an eine Aufstandsebene angrenzendes Fußelement und ein erstes Halteelement auf, das vom Fußelement in eine zur Aufstandsebene angewinkelte Ständerrichtung absteht und eine erste Nutzfahrzeugaufnahme ausbildet, die zur Fixierung eines ersten Nutzfahrzeuges in einer Hochkantstellung, in der eine Ladefläche des ersten Nutzfahrzeuges zur Aufstandsebene angewinkelt angeordnet ist, an der Ständervorrichtung ausgebildet ist. Erfindungsgemäß weist die Ständervorrichtung eine weitere Nutzfahrzeugaufnahme auf, die zur Fixierung eines weiteren Nutzfahrzeuges in der Hochkantstellung an der Ständervorrichtung ausgebildet ist und derart relativ zur ersten Nutzfahrzeugaufnahme in eine zur Aufstandsebene parallele Breitenrichtung versetzt angeordnet ist, dass die Ladefläche des ersten Nutzfahrzeuges vom weiteren Nutzfahrzeug abgewandt ausgerichtet ist.

## Beschreibung

Die Erfindung betrifft eine Ständervorrichtung zum Halten von zumindest zwei Nutzfahrzeugen. Die Ständervorrichtung weist ein Fußelement auf, das an eine Aufstandsebene angrenzt. Außerdem weist die Ständervorrichtung ein erstes Halteelement auf. Das erste Halteelement steht vom Fußelement in eine Ständerrichtung ab, die zur Aufstandsebene angewinkelt ist. Das erste Halteelement bildet eine erste Nutzfahrzeugaufnahme aus. Die erste Nutzfahrzeugaufnahme ist zur Fixierung eines ersten Nutzfahrzeuges an der Ständervorrichtung ausgebildet, während derer sich das erste Nutzfahrzeug in einer Hochkantstellung befindet. In der Hochkantstellung ist eine Ladefläche des ersten Nutzfahrzeuges zur Aufstandsebene angewinkelt angeordnet.

Eine derartige Ständervorrichtung ist aus der TR 2020 17 135 A2 bekannt. Bei der bekannten Ständervorrichtung ist die Ständerrichtung um 90° zur Aufstandsebene angewinkelt. Im offenbarten Anwendungsfall werden zwei Ständervorrichtungen, die gemeinsam eine Ständereinrichtung ausbilden, eingesetzt. An den ersten Halteelementen der Ständervorrichtungen sind je die gleichen zwei Nutzfahrzeuge derart zur Ausbildung einer Nutzfahrzeuganordnung angeordnet, dass ihre Ladeflächen einander zugewandt und voneinander beabstandet sind. Die bekannte Ständervorrichtung dient zum Transport der Nutzfahrzeuge, insbesondere in Behältern wie Überseecontainern. Nachteilig an der bekannten Ständervorrichtung ist, dass die damit herzustellende Nutzfahrzeuganordnung einen großen Bauraumbedarf hat.

Aufgabe der vorliegenden Erfindung ist die Bereitstellung einer gattungsgemäßen Ständervorrichtung und einer die Ständervorrichtung umfassenden Ständereinrichtung zur Herstellung einer platzsparenderen und stabileren Nutzfahrzeuganordnung. Außerdem ist Aufgabe der Erfindung die Bereitstellung der Nutzfahrzeuganordnung sowie eines Verfahrens zu ihrer Ausbildung.

Erfindungsgemäß weist die Ständervorrichtung eine weitere Nutzfahrzeugaufnahme auf, die zur Fixierung eines weiteren Nutzfahrzeuges an der Ständervorrichtung ausgebildet ist, wobei sich das weitere Nutzfahrzeug in der Hochkantstellung befindet. Dabei ist die weitere Nutzfahrzeugaufnahme derart relativ zur ersten Nutzfahrzeugaufnahme in eine zur Aufstandsebene parallele Breitenrichtung versetzt angeordnet, dass die Ladefläche des ersten Nutzfahrzeuges vom weiteren Nutzfahrzeug abgewandt ausgerichtet ist. Durch die vom weiteren Nutzfahrzeug abgewandte Ladefläche des ersten Nutzfahrzeuges lassen sich die beiden Nutzfahrzeuge relativ zueinander besonders platzsparend anordnen.

Bevorzugt ist die weitere Nutzfahrzeugaufnahme derart zur Fixierung des weiteren Nutzfahrzeuges ausgebildet, dass eine Ladefläche des weiteren Nutzfahrzeuges vom ersten Nutzfahrzeug abgewandt ausgerichtet ist. Durch die jeweils voneinander abgewandten Ladeflächen der Nutzfahrzeuge sind sie sich gegenseitig insbesondere mit ihren Fahrwerken oder einem Teil davon zugewandt ineinander eingreifend anzuordnen. Damit ist gemeint, dass die beiden Nutzfahrzeuge in der erfindungsgemäßen Nutzfahrzeuganordnung jeweils eine zur Breitenrichtung rechtwinklige Längsebene schneiden. Alternativ ist die weitere Nutzfahrzeugaufnahme bevorzugt derart zur Fixierung des weiteren Nutzfahrzeuges ausgebildet, dass die Ladefläche des weiteren Nutzfahrzeuges dem ersten Nutzfahrzeug zugewandt ausgerichtet ist. In diesem Fall haben die beiden Nutzfahrzeuge insbesondere die gleiche Ausrichtung und sind besonders bevorzugt eng gestapelt anzuordnen. Zur Herstellung der erfindungsgemäßen Nutzfahrzeuganordnung lassen sich das erste Nutzfahrzeug und das weitere Nutzfahrzeug in beiden Fällen besonders weit aufeinander zubewegen. Durch die erfindungsgemäße Ständervorrichtung lässt sich in jedem Fall eine besonders platzsparende Nutzfahrzeuganordnung erreichen.

Besonders bevorzugt weist die erfindungsgemäße Ständervorrichtung zwei weitere Nutzfahrzeugaufnahmen auf, die zur Fixierung zweier weiterer Nutzfahrzeuge an der Ständervorrichtung ausgebildet sind, während die Nutzfahrzeuge sich in der Hochkantstellung befinden. Die zwei weiteren Nutzfahrzeugaufnahmen sind relativ zur ersten Nutzfahrzeugaufnahme und relativ zueinander in die Breitenrichtung versetzt angeordnet. Insbesondere sind die zwei weiteren Nutzfahrzeugaufnahmen derart ausgebildet, dass eine zweite Nutzfahrzeugaufnahme derart zur Fixierung eines zweiten Nutzfahrzeuges ausgebildet ist, dass die Ladefläche des zweiten Nutzfahrzeuges vom ersten Nutzfahrzeug abgewandt ausgerichtet ist, und/oder eine dritte Nutzfahrzeugaufnahme derart zur Fixierung eines dritten Nutzfahrzeuges ausgebildet ist, dass die Ladefläche des dritten Nutzfahrzeuges dem ersten Nutzfahrzeug zugewandt ausgerichtet ist. Hierdurch lässt sich eine besonders platzsparende und drei Nutzfahrzeuge umfassende Nutzfahrzeuganordnung herstellen.

Bei der Ständervorrichtung handelt es sich um ein starr ausgebildetes, ein- oder mehrteiliges Hilfsmittel zur Fixierung der Nutzfahrzeuge relativ zueinander. Die Aufstandsebene ist eine gedachte Ebene, an die die Ständervorrichtung insbesondere mit ihrer Unterseite angrenzt. Im Anwendungsfall fällt die Aufstandsebene insbesondere mit einer Oberfläche eines Bodens zusammen, auf dem die Ständervorrichtung aufsteht. Das erste Halteelement ist an dem Fußelement insbesondere lösbar befestigt.

Die erste Nutzfahrzeugaufnahme ist insbesondere durch ein von der Aufstandsebene abgewandtes Ende des ersten Halteelementes ausgebildet. Die erste Nutzfahrzeugaufnahme ist eine zur adäquaten Fixierung des ersten Nutzfahrzeuges eingerichtete Anschluss- oder Fixierungsstelle. Abgewandt vom weiteren Nutzfahrzeug ist die Ladefläche des ersten Nutzfahrzeuges insbesondere dann, wenn das/die die Ladefläche ausbildende(n) Bauteile sich zwischen der Ladefläche und dem weiteren Nutzfahrzeug erstreckt/en.

Die Hochkantstellung der Nutzfahrzeuge ist durch eine zur Aufstandsebene, bevorzugt um zumindest 45°, besonders bevorzugt um zumindest im Wesentlichen 90°, angewinkelte Anordnung der Ladeflächen der Nutzfahrzeuge gekennzeichnet. Die Aufstandsebene schneidet die Ladeflächen nicht. In der Hochkantstellung sind die Nutzfahrzeuge insbesondere ausgehend von ihrer Standardstellung, in der sie zu nutzen sind, auf ihre Seite geschwenkt angeordnet. In der Hochkantstellung ist eine Drehachse zumindest eines Rades oder einer Radnabe der Nutzfahrzeuge zur Aufstandsebene angewinkelt, insbesondere rechtwinklig, angeordnet. Die Hochkantstellung ist derart zu verstehen, dass sie die Positionierung des jeweiligen Nutzfahrzeuges relativ zur Aufstandsebene und nicht relativ zu dem zumindest einen weiteren Nutzfahrzeug spezifiziert, so dass die Nutzfahrzeuge in ihren Hochkantstellungen relativ zueinander unterschiedlich positioniert sein können.

Die Ständervorrichtung bildet pro zu fixierendes Nutzfahrzeug bevorzugt zwei Nutzfahrzeugaufnahmen aus, die besonders bevorzugt unterschiedlich weit von der Aufstandsebene beabstandet sind. Das bedeutet, dass die erfindungsgemäße Ständervorrichtung insbesondere vier oder sechs Nutzfahrzeugaufnahmen ausbildet. Diese Nutzfahrzeugaufnahmen werden nachfolgend als erste, zweite, dritte, vierte sowie ggf. fünfte und sechste Nutzfahrzeugaufnahme bezeichnet und können in beliebigen Unterkombinationen miteinander zu erfindungsgemäßen Ständervorrichtungen kombiniert werden, ohne dass dafür jeweils sämtliche der vier oder sechs Nutzfahrzeugaufnahmen notwendig sind. Als weitere Nutzfahrzeugaufnahmen können die dritte, die vierte, die fünfte und die sechste Nutzfahrzeugaufnahme angesehen werden. Die erste Nutzfahrzeugaufnahme und die weitere Nutzfahrzeugaufnahme sind bevorzugt gleich weit oder unterschiedlich weit von der Aufstandsebene beabstandet angeordnet. Als weiteres Nutzfahrzeug kann das zweite oder dritte Nutzfahrzeug angesehen werden.

Die Ladeflächen der Nutzfahrzeuge sind bevorzugt Oberflächen, auf denen im Betrieb der Nutzfahrzeuge zu transportierende Güter aufliegen bzw. aufstehen und/oder die im Betrieb der Nutzfahrzeuge vom Boden abgewandt sind. Die Ladeflächen können sowohl geschlossene Flächen als auch unterbrochene oder zusammengesetzte Flächen sein, wie sie bei Containerchassis üblich sind. Die Nutzfahrzeuge sind bevorzugt derart zu fixieren, dass ihre übliche Fahrtrichtung zur Breitenrichtung um 90° angewinkelt ist.

Vorzugsweise weist das Fußelement ein Fußträgerelement auf, das sich zumindest länglich in die Breitenrichtung erstreckt, wie die erste Nutzfahrzeugaufnahme und die weitere Nutzfahrzeugaufnahme in die Breitenrichtung voneinander beabstandet sind. Das Fußträgerelement ist insbesondere ein Metallträger, der beispielsweise einen U-förmigen Querschnitt hat. Durch die längliche Erstreckung wird die Gefahr eines Umkippens der durch die Ständervorrichtung auszubildenden Nutzfahrzeuganordnung minimiert, besonders bevorzugt erstreckt sich das Fußträgerelement höchstens doppelt so weit in die Breitenrichtung, wie die erste Nutzfahrzeugaufnahme und die weitere Nutzfahrzeugaufnahme in die Breitenrichtung voneinander beabstandet sind. Dadurch wird der Bauraumbedarf begrenzt.

Vorzugsweise weist das Fußelement zumindest zwei, insbesondere drei, in die Breitenrichtung voneinander beabstandete Gleitelemente auf. Die Gleitelemente stehen insbesondere vom Fußträgerelement ab und grenzen an die Aufstandsebene an. Die Gleitelemente sorgen für einen stabileren Stand der Ständervorrichtung und erlauben ein leichtes Gleiten der Ständervorrichtung auf dem Boden.

Das Fußelement weist zumindest an einem Ende des Fußträgerelementes, insbesondere an beiden Ende des Fußträgerelementes, ein Führungselement auf. Das Führungselement weist bevorzugt eine von dem Fußträgerelement abgewandte Führungsfläche auf. Die Führungsfläche grenzt an eine Seitenebene an, die sich zur Breitenrichtung rechtwinklig und/oder zur Längsebene parallel erstreckt. Die Führungsfläche erstreckt sich besonders bevorzugt zumindest abschnittsweise um weniger als 90° angewinkelt zur Seitenebene. Insbesondere erstreckt sich die Führungsfläche zumindest abschnittsweise um weniger als 45° oder um weniger als 15° angewinkelt zur Seitenebene. Durch das Führungselement wird die Gleitbewegung der Ständervorrichtung bzw. der Nutzfahrzeuganordnung im Behälter im Falle eines Anstoßens an Seitenwände des Behälters erleichtert und eine schwerwiegende Beeinträchtigung der Stabilität der Ständervorrichtung hierbei vermieden.

Vorzugsweise bildet das Fußelement eine/die zweite Nutzfahrzeugaufnahme aus. Die zweite Nutzfahrzeugaufnahme ist zur Fixierung des ersten Nutzfahrzeuges an der Ständervorrichtung ausgebildet, während sich das erste Nutzfahrzeug in der Hochkantstellung befindet. Die zweite Nutzfahrzeugaufnahme ist zwischen der ersten Nutzfahrzeugaufnahme und der Aufstandsebene angeordnet. Insbesondere wird die zweite Nutzfahrzeugaufnahme zwischen der ersten Nutzfahrzeugaufnahme und der Aufstandsebene von einer gedachten Geraden geschnitten, die zur Aufstandsebene rechtwinklig verläuft und die erste Nutzfahrzeugaufnahme schneidet. Die zweite Nutzfahrzeugaufnahme ist insbesondere durch ein von dem Fußträgerelement in eine von der Aufstandsebene abgewandte Richtung abstehendes Blech ausgebildet. Die erste Nutzfahrzeugaufnahme und die zweite Nutzfahrzeugaufnahme sind bevorzugt gleichartig ausgebildet. Durch die zweite Nutzfahrzeugaufnahme ist das erste Nutzfahrzeug an zwei Stellen an der Ständervorrichtung zu fixieren. Durch die Anordnung der zweiten Nutzfahrzeugaufnahme unmittelbar am Fußelement ist die Erstreckung der herzustellenden Nutzfahrzeuganordnung in die Höhe reduziert und die Stabilität erhöht. Die zweite Nutzfahrzeugaufnahme weicht von der weiteren Nutzfahrzeugaufnahme ab.

Vorzugsweise bildet das Fußelement zwei weitere Nutzfahrzeugaufnahmen aus, die relativ zur zweiten Nutzfahrzeugaufnahme in die Breitenrichtung versetzt angeordnet sind. Diese zwei weiteren Nutzfahrzeugaufnahmen sind zur Fixierung des zweiten Nutzfahrzeuges und des dritten Nutzfahrzeuges an der Ständervorrichtung ausgebildet. Insbesondere ist jedes der Nutzfahrzeuge durch zwei Nutzfahrzeugaufnahmen an der Ständervorrichtung zu fixieren, wobei die zwei weiteren vom Fußelement ausgebildeten Nutzfahrzeugaufnahmen eine/die vierte Nutzfahrzeugaufnahme und eine/die sechste Nutzfahrzeugaufnahme darstellen. Dadurch wird der vorbeschriebene Vorteil in Bezug auf sämtliche zu fixierende Nutzfahrzeuge erreicht.

Bevorzugt weist das Fußelement ein Halteelementaufnahmeelement auf. An dem Halteelementaufnahmeelement liegt das erste Halteelement zumindest im montierten Zustand der Ständervorrichtung an. Das Halteelementaufnahmeelement steht zumindest teilweise in die zur Breitenrichtung rechtwinklige und zur Aufstandsebene parallele Längsrichtung vom Fußträgerelement ab bzw. darüber über. Insbesondere ist das Halteelementaufnahmeelement zumindest teilweise in die Längsrichtung versetzt relativ zur zweiten Nutzfahrzeugaufnahme angeordnet. Dadurch wird eine gleichermaßen versetzte Anordnung des ersten Halteelementes relativ zum ersten Nutzfahrzeug erleichtert, die eine besonders stabile und platzsparende Ausbildung des ersten Halteelementes erlaubt. Das Halteelementaufnahmeelement ist besonders bevorzugt zumindest auf die Breitenrichtung bezogen zwischen der zweiten Nutzfahrzeugaufnahme und den zwei weiteren durch das Fußelement ausgebildeten Nutzfahrzeugaufnahmen angeordnet.

Das erste Haltelement umfasst vorzugsweise ein sich länglich erstreckendes Halteträgerelement. Das Halteträgerelement erstreckt sich in die Ständerrichtung länglich. Die Ständerrichtung ist besonders bevorzugt um weniger als 90°, insbesondere um weniger als 80°, zur Aufstandsebene angewinkelt. Bei dem Halteträgerelement handelt es sich insbesondere um einen Träger, besonders bevorzugt um ein Vierkantrohr. Durch die derartig schräge längliche Erstreckung des Halteträgerelementes kann ein durch die Fixierung des ersten Nutzfahrzeuges erzeugtes Biegemoment zwischen dem ersten Halteelement und dem Fußelement minimiert werden.

Das erste Halteelement umfasst vorzugsweise ein in die Längsrichtung vom Halteträgerelement abstehendes Nutzfahrzeugaufnahmeelement. Das Nutzfahrzeugaufnahmeelement bildet die erste Nutzfahrzeugaufnahme aus. Das Nutzfahrzeugaufnahmeelement ist insbesondere durch ein Blech ausgebildet, das sich zur Breitenrichtung rechtwinklig flächig erstreckt. Das abstehende Nutzfahrzeugaufnahmeelement erleichtert die Anordnung des Halteträgerelementes derart, dass es relativ zum Fußelement und/oder zum fixierenden ersten Nutzfahrzeug in die Längsrichtung versetzt ist.

Vorzugsweise weist die Ständervorrichtung eine in die Breitenrichtung durchgehende Aufnahmeausnehmung auf. Die Aufnahmeausnehmung dient zur Ausbildung der ersten Nutzfahrzeugaufnahme und/oder zur Ausbildung der weiteren Nutzfahrzeugaufnahme. Insbesondere erstreckt sich die Aufnahmeausnehmung durch das Nutzfahrzeugaufnahmeelement. Besonders bevorzugt sind die erste Nutzfahrzeugaufnahme, die zweite Nutzfahrzeugaufnahme, die fünfte Nutzfahrzeugaufnahme und die sechste Nutzfahrzeugaufnahme durch eine derartige Aufnahmeausnehmung ausgebildet. Alternativ sind bevorzugt die dritte Nutzfahrzeugaufnahme und die vierte Nutzfahrzeugaufnahme durch eine derartige Aufnahmeausnehmung ausgebildet.

Besonders bevorzugt ist die Aufnahmeausnehmung in die Längsrichtung länglich ausgebildet. Es handelt sich bei der Aufnahmeausnehmung insbesondere um ein Langloch. Durch diese Ausbildung der Aufnahmeausnehmung können als Containerchassis ausgebildete Nutzfahrzeuge mittels ihrer ohnehin vorhandenen Verriegelungsbolzen gemäß ISO-1496, den sogenannten Twistlocks, an der Ständervorrichtung fixiert werden.

Bevorzugt weist die Ständervorrichtung ein sich länglich erstreckendes Bolzenelement auf, das zur Ausbildung der ersten Nutzfahrzeugaufnahme oder der weiteren Nutzfahrzeugaufnahme dient. Das Bolzenelement erstreckt sich besonders bevorzugt länglich in eine zur Aufstandsebene rechtwinklige Hochrichtung. Ein derartiges Bolzenelement dient insbesondere zur Ausbildung der ersten Nutzfahrzeugaufnahme, der zweiten Nutzfahrzeugaufnahme, der fünften Nutzfahrzeugaufnahme und der sechsten Nutzfahrzeugaufnahme. Alternativ dient ein derartiges Bolzenelement bevorzugt zur Ausbildung der dritten Nutzfahrzeugaufnahme und der vierten Nutzfahrzeugaufnahme. Das Bolzenelement ist insbesondere am Nutzfahrzeugaufnahmeelement oder am Fußelement, bevorzugt am Fußträgerelement, angeordnet. Insbesondere dient die zumindest eine durch die Aufnahmeausnehmung ausgebildete Nutzfahrzeugaufnahme zur Fixierung eines Nutzfahrzeughecks an der Ständervorrichtung und die zumindest eine durch das Bolzenelement ausgebildete Nutzfahrzeugaufnahme zur Fixierung einer Nutzfahrzeugfront an der Ständervorrichtung.

Die Ständervorrichtung weist vorzugsweise ein zweites Haltelement auf. Das zweite Halteelement ist relativ zum ersten Halteelement in die Breitenrichtung versetzt angeordnet. Das zweite Halteelement steht vom Fußelement in eine zur Aufstandsebene angewinkelte Richtung, insbesondere in die Ständerrichtung, ab. Das zweite Halteelement bildet bevorzugt die weitere Nutzfahrzeugaufnahme, insbesondere die dritte und/oder fünfte Nutzfahrzeugaufnahme aus. Besonders bevorzugt umfassen das erste Halteelement und das zweite Halteelement gleichartig ausgebildete Halteträgerelemente oder sind das erste Halteelement und das zweite Halteelement insgesamt gleich ausgebildet. Dadurch, dass ein weiteres Halteelement zur Fixierung des weiteren Nutzfahrzeuges genutzt wird, lassen sich auch hier die in Bezug auf das erste Halteelement beschriebenen Vorteile erreichen.

Vorzugsweise weist die Ständervorrichtung ein Halteverbindungselement auf, das an einem vom Fußelement abgewandten Ende des ersten Halteelementes angeordnet ist und sich länglich in die Breitenrichtung erstreckt. Das Halteverbindungselement ist insbesondere lösbar an dem ersten Halteelement befestigt. Das Halteverbindungselement weist insbesondere ein Halteverbindungsträgerelement auf, das sich länglich in die Breitenrichtung erstreckt und im Anwendungsfall insbesondere oberhalb zumindest eines der Nutzfahrzeuge angeordnet ist. Das Halteverbindungselement liegt dem Fußelement bezogen auf das zumindest eine Nutzfahrzeug insbesondere gegenüber. Das Halteverbindungselement ist vorzugsweise auch an einem vom Fußelement abgewandten Ende des zweiten Halteelementes angeordnet. Das Halteverbindungselement ist bevorzugt an einem Nutzfahrzeugaufnahmeelement oder Nutzfahrzeugaufnahmeelementen des ersten Halteelementes bzw. der Halteelemente angeordnet. Dabei ist die Aufnahmeausnehmung insbesondere zwischen dem Halteträgerelement und dem Halteverbindungselement angeordnet. Das Halteverbindungselement bildet besonders bevorzugt die weitere Nutzfahrzeugaufnahme, insbesondere die dritte Nutzfahrzeugaufnahme und/oder die fünfte Nutzfahrzeugaufnahme aus. Durch das Halteverbindungselement ist die Stabilität der an der Ständervorrichtung zu fixierende Nutzfahrzeuge relativ zueinander weiter zu erhöhen.

Erfindungsgemäß wird die Aufgabe ferner durch eine Ständereinrichtung gelöst. Die Ständereinrichtung weist eine erste vor- und/oder nachbeschriebene Ständervorrichtung und eine zweite vor- und/oder nachbeschriebene Ständervorrichtung auf. Die zweite Ständervorrichtung ist relativ zur ersten Ständervorrichtung in die Längsrichtung versetzt angeordnet. Die erste Ständervorrichtung weist bevorzugt das zweite Halteelement auf. Die zweite Ständervorrichtung weist bevorzugt das Halteverbindungselement und kein zweites Haltelement auf. Im Anwendungsfall, d.h. zur Herstellung der Nutzfahrzeuganordnung, sind die beiden Ständervorrichtungen der Ständereinrichtung voneinander beabstandet angeordnet, um die zu fixierenden Nutzfahrzeuge jeweils heck- oder frontseitig an den Ständervorrichtungen fixieren zu können.

Vorzugsweise weist die Ständereinrichtung zusätzlich ein Zentralverbindungselement auf, das bezogen auf die Längsrichtung insbesondere zwischen den Ständervorrichtungen anzuordnen ist. Das Zentralverbindungselement dient zur Befestigung des ersten Nutzfahrzeuges an dem weiteren Nutzfahrzeug, insbesondere an dem dritten Nutzfahrzeug. Das Zentralverbindungselement erstreckt sich vorzugsweise länglich in die Breitenrichtung und ist zur Anordnung an von der Aufstandsebene abgewandten Seiten der Nutzfahrzeuge ausgebildet. Das Zentralverbindungselement dient zur Erhöhung der Stabilität der Nutzfahrzeuganordnung.

Die Aufgabe wird erfindungsgemäß außerdem durch die Nutzfahrzeuganordnung gelöst. Die Nutzfahrzeuganordnung umfasst zumindest eine vor- und/oder nachbeschriebene Ständervorrichtung, insbesondere eine vor- und/oder nachbeschriebene Ständereinrichtung. Ferner umfasst die Nutzfahrzeuganordnung zumindest das erste Nutzfahrzeug, das mittels der ersten Nutzfahrzeugaufnahme und insbesondere mittels der zweiten Nutzfahrzeugaufnahme in der Hochkantstellung an der (ersten) Ständervorrichtung fixiert ist. Insbesondere ist das erste Nutzfahrzeug mittels der dritten Nutzfahrzeugaufnahme und der vierten Nutzfahrzeugaufnahme der zweiten Ständervorrichtung oder mittels der fünften Nutzfahrzeugaufnahme und der sechsten Nutzfahrzeugaufnahme der zweiten Ständervorrichtung daran fixiert. Außerdem umfasst die Nutzfahrzeuganordnung zumindest das weitere bzw. das zweite Nutzfahrzeug, das mittels einer dritten Nutzfahrzeugaufnahme und insbesondere mittels einer vierten Nutzfahrzeugaufnahme in der Hochkantstellung an der (ersten) Ständervorrichtung fixiert ist. Die Ladefläche des ersten Nutzfahrzeuges ist dabei vom weiteren Nutzfahrzeug abgewandt ausgerichtet.

Das weitere bzw. zweite Nutzfahrzeug ist bevorzugt derart mittels der dritten Nutzfahrzeugaufnahme fixiert, dass die Ladefläche des weiteren bzw. zweiten Nutzfahrzeuges vom ersten Nutzfahrzeug abgewandt ausgerichtet ist. Das erste Nutzfahrzeug und das weitere bzw. zweite Nutzfahrzeug sind bevorzugt derart ineinander eingreifend fixiert, dass die Längsebene das erste Nutzfahrzeug und das weitere bzw. zweite Nutzfahrzeug schneidet. Insbesondere sind die Ladeflächen des ersten Nutzfahrzeuges und des weiteren bzw. zweiten Nutzfahrzeuges dabei höchstens um das Doppelte, besonders bevorzugt höchstens um das 1,5-fache, insbesondere höchstens um das 1,2-fache der Erstreckung des ersten Nutzfahrzeuges und/oder des weiteren bzw. zweiten Nutzfahrzeuges in die Breitenrichtung voneinander beabstandet. Dadurch baut die Nutzfahrzeuganordnung besonders kompakt.

Vorzugsweise umfasst die Nutzfahrzeuganordnung das dritte Nutzfahrzeug. Das dritte Nutzfahrzeug ist mittels der fünften Nutzfahrzeugaufnahme und insbesondere mittels der sechsten Nutzfahrzeugaufnahme bevorzugt derart in der Hochkantstellung an der Ständervorrichtung fixiert, dass die Ladefläche des dritten Nutzfahrzeuges dem ersten Nutzfahrzeug und/oder dem zweiten Nutzfahrzeug zugewandt ausgerichtet ist. Dadurch können mehr Fahrzeuge per Nutzfahrzeuganordnung als Einheit transportiert werden.

Die Nutzfahrzeuge zeichnen sich jeweils durch einen Nutzfahrzeugrahmen, die Ladefläche und ein Fahrwerk insbesondere einschließlich Rädern aus. Anstelle zumindest eines der Nutzfahrzeuge bzw. als zumindest eines der Nutzfahrzeuge kann auch ein Nutzfahrzeugfahrgestell einschließlich Nutzfahrzeugrahmen, Ladefläche und zumindest eines Teils des Fahrwerks, insbesondere einschließlich der Radnabe, und ohne Räder zur Ausbildung der Nutzfahrzeuganordnung genutzt werden. Konkret lässt sich beispielsweise durch die Demontage der Räder des dritten Nutzfahrzeuges durch relativ wenig Aufwand ein erheblicher Bauraum einsparen. Nach dem Transport sind die Räder ohne Weiteres wieder zu montieren.

Die Nutzfahrzeuganordnung umfasst insbesondere einen Container. Der Container umschließt die zumindest eine Ständervorrichtung, insbesondere die Ständereinrichtung, und das erste Nutzfahrzeug und das weitere bzw. zweite Nutzfahrzeug und insbesondere das dritte Nutzfahrzeug. Bei dem Container handelt es sich insbesondere um den Überseecontainer. Besonders bevorzugt handelt es sich bei dem Container um einen 45'(Zoll)-High-Cube-Container. Durch die Nutzfahrzeuganordnung lassen sich erstmals drei Standard-Nutzfahrzeuge in einem Standard-Überseecontainer transportieren. Dadurch lassen sich die Kosten für den Transport von solchen Nutzfahrzeugen insbesondere auf dem Seeweg erheblich senken.

Vorzugsweise ist das erste Nutzfahrzeug heckseitig an der ersten Ständervorrichtung fixiert und frontseitig an der zweiten Ständervorrichtung fixiert. Alternativ oder zusätzlich ist das weitere bzw. zweite Nutzfahrzeug frontseitig an der ersten Ständervorrichtung fixiert und heckseitig an der zweiten Ständervorrichtung fixiert. Alternativ oder zusätzlich ist das dritte Nutzfahrzeug heckseitig an der ersten Ständervorrichtung fixiert und frontseitig an der zweiten Ständervorrichtung fixiert. Damit sind benachbarte Nutzfahrzeuge in die Längsrichtung umgekehrt zueinander ausgerichtet, was das Eingreifen der Nutzfahrzeuge ineinander erleichtert.

Bevorzugt handelt es sich bei zumindest einem der Nutzfahrzeuge, insbesondere bei sämtlichen der vorgenannten Nutzfahrzeuge, um (einen) Sattelauflieger. Besonders bevorzugt handelt es sich um als Containerchassis ausgebildete Sattelaufleger. Diese weisen frontseitig einen Königszapfen und heckseitig, insbesondere ausschließlich heckseitig, ein Fahrwerk mit zumindest einer Fahrwerksachse auf. Das erste Nutzfahrzeug, das zweite Nutzfahrzeug und/oder das dritte Nutzfahrzeug weisen/weist genau zwei Fahrzeugachsen auf. Pro Fahrzeugachse sind insbesondere zwei jeweils doppelt bereifte Räder montiert. Derartig ausgestattete Nutzfahrzeuge sind insbesondere für den US-Markt und den asiatischen Markt von erheblicher Bedeutung und erleichtern die vorbeschriebene platzsparende Anordnung der Nutzfahrzeuge.

Die Erfindung wird weiterhin gelöst durch ein Verfahren zur Ausbildung der vor- oder nachbeschriebenen Nutzfahrzeuganordnung. Das Verfahren ist gekennzeichnet durch die folgenden Schritte, deren Reihenfolge durch das nachfolgende nicht festgelegt ist:
In einem ersten Schritt wird das erste Nutzfahrzeug an der ersten Ständervorrichtung mittels der ersten Nutzfahrzeugaufnahme und insbesondere mittels der zweiten Nutzfahrzeugaufnahme der ersten Ständervorrichtung fixiert. In einem zweiten Schritt wird das erste Nutzfahrzeug an der zweiten Ständervorrichtung mittels der ersten Nutzfahrzeugaufnahme und insbesondere mittels der zweiten Nutzfahrzeugaufnahme der zweiten Ständervorrichtung fixiert. In einem dritten Schritt wird das weitere oder zweite Nutzfahrzeug an der ersten Ständervorrichtung mittels einer weiteren Nutzfahrzeugaufnahme der ersten Ständervorrichtung fixiert. Insbesondere wird das weitere oder zweite Nutzfahrzeug an der ersten Ständervorrichtung mittels einer dritten Nutzfahrzeugaufnahme und/oder einer vierten Nutzfahrzeugaufnahme der ersten Ständervorrichtung fixiert. In einem vierten Schritt wird das weitere oder zweite Nutzfahrzeug an der zweiten Ständervorrichtung mittels einer weiteren Nutzfahrzeugaufnahme der zweiten Ständervorrichtung fixiert. Insbesondere wird das weitere oder zweite Nutzfahrzeug an der zweiten Ständervorrichtung mittels einer dritten Nutzfahrzeugaufnahme und/oder einer vierten Nutzfahrzeugaufnahme der zweiten Ständervorrichtung fixiert.

In einem optionalen fünften Schritt wird das dritte Nutzfahrzeug an der ersten Ständervorrichtung mittels einer weiteren Nutzfahrzeugaufnahmen der ersten Ständervorrichtung fixiert. Insbesondere wird das dritte Nutzfahrzeug an der ersten Ständervorrichtung mittels einer fünften Nutzfahrzeugaufnahme und/oder einer sechsten Nutzfahrzeugaufnahme der ersten Ständervorrichtung fixiert. In einem optionalen sechsten Schritt wird das dritte Nutzfahrzeug an der zweiten Ständervorrichtung mittels einer weiteren Nutzfahrzeugaufnahme der zweiten Ständervorrichtung fixiert. Insbesondere wird das dritte Nutzfahrzeug an der zweiten Ständervorrichtung mittels einer fünften Nutzfahrzeugaufnahme und/oder mittels einer sechsten Nutzfahrzeugaufnahme der zweiten Ständervorrichtung fixiert.

Bevorzugt wird das Haltelement der zweiten Ständervorrichtung mit dem Fußelement der zweiten Ständervorrichtung verbunden, nachdem das erste Nutzfahrzeug mittels der zweiten Nutfahrzeugaufnahme der zweiten Ständervorrichtung fixiert wurde. Das erste Nutzfahrzeug wird insbesondere vorher mittels der ersten Nutzfahrzeugaufnahme der ersten Ständervorrichtung fixiert. Die erste Nutzfahrzeugaufnahme der ersten Ständervorrichtung ist insbesondere durch das erste Haltelement der ersten Ständervorrichtung ausgebildet.

Das zweite Haltelement der ersten Ständervorrichtung wird bevorzugt mit dem Fußelement der ersten Ständervorrichtung verbunden, nachdem das erste Nutzfahrzeug mittels der ersten Nutzfahrzeugaufnahme der ersten Ständervorrichtung fixiert wurde. Dadurch ist insbesondere die Montage des ersten Nutzfahrzeuges an der ersten Ständervorrichtung erleichtert.

Vorzugsweise wird das Halteverbindungselement der ersten Ständervorrichtung mit dem ersten Halteelement der ersten Ständervorrichtung und dem zweiten Halteelement der ersten Ständervorrichtung verbunden, nachdem das erste Nutzfahrzeug mittels der ersten Nutzfahrzeugaufnahme der ersten Ständervorrichtung das zweite Nutzfahrzeug mittels der weiteren bzw. zweiten Nutzfahrzeugaufnahme der ersten Ständervorrichtung fixiert wurde. Alternativ oder zusätzlich wird das Halteverbindungselement der zweiten Ständervorrichtung mit dem Halteelement der zweiten Ständervorrichtung verbunden, nachdem das erste Nutzfahrzeug mittels der ersten Nutzfahrzeugaufnahme der zweiten Ständervorrichtung und das zweite Nutzfahrzeug mittels der weiteren bzw. zweiten Nutzfahrzeugaufnahme der zweiten Ständervorrichtung fixiert wurde. Dadurch ist die Montage der Nutzfahrzeuganordnung erheblich erleichtert.

Bevorzugt werden gemäß dem erfindungsgemäßen Verfahren zumindest die Räder des dritten Nutzfahrzeuges demontiert. Besonders bevorzugt werden/wird neben den Rädern eine Stützwinde, eine Feuerlöscherkonsole und/oder zumindest ein Seitenschutzblech demontiert. Vor dem ersten Nutzfahrzeug und/oder dem zweiten Nutzfahrzeug werden/wird die Räder vorzugsweise nicht demontiert. Hierdurch ist durch überschaubaren Aufwand eine erhebliche Bauraumreduktion zu erreichen.

Vorzugsweise werden die an den Ständervorrichtungen fixierten Nutzungsfahrzeuge in die oder entgegen der Längsrichtung in den Container als Behälter geschoben. Insbesondere die vorstehend erläuterte Demontage erlaubt das Einschieben in den vorstehend spezifizierten Überseecontainer als Container. Durch die Nutzung des Containers sind die Nutzfahrzeuge während des Transports gegen äußere Beschädigungen abgesichert. Besonders bevorzugt werden/wird die fixierten Nutzfahrzeuge und/oder zumindest einer der Ständervorrichtungen am Container zumindest mittels eines Spannmittels verspannt.

Weitere Einzelheiten und Vorteile sind dem nachfolgend beschriebenen, schematisch dargestellten Ausführungsbeispielen zu entnehmen; es zeigen:
- Fig. 1: eine perspektivische Darstellung einer ersten erfindungsgemä-ßen Nutzfahrzeuganordnung,
- Fig. 2: eine Frontansicht der ersten erfindungsgemäßen Nutzfahrzeuganordnung,
- Fig. 3: eine Heckansicht der ersten erfindungsgemäßen Nutzfahrzeuganordnung,
- Fig. 4: eine perspektivische Darstellung eines Hecks einer zweiten erfindungsgemäßen Nutzfahrzeuganordnung,
- Fig. 5: eine perspektivische Darstellung einer Front der zweiten erfindungsgemäßen Nutzfahrzeuganordnung,
- Fig. 6: eine Draufsicht auf eine dritte erfindungsgemäße Nutzfahrzeuganordnung,
- Fig. 7: eine Draufsicht auf eine vierte erfindungsgemäße Nutzfahrzeuganordnung,
- Fig. 8: eine perspektivische Darstellung der vierten erfindungsgemä-ßen Nutzfahrzeuganordnung,
- Fig. 9: eine perspektivische Darstellung einer erfindungsgemäßen Ständereinrichtung mit einer ersten Ständervorrichtung und einer zweiten Ständervorrichtung,
- Fig. 10: eine perspektivische Darstellung eines Fußelementes der ersten Ständervorrichtung,
- Fig. 11: eine perspektivische Darstellung eines Fußelementes der zweiten Ständervorrichtung,
- Fig. 12: eine perspektivische Darstellung eines Halteelementes der zweiten Ständervorrichtung,
- Fig. 13: eine perspektivische Darstellung eines Haltelementes der ersten Ständervorrichtung,
- Fig. 14: eine perspektivische Darstellung eines Halteverbindungselementes der ersten Ständervorrichtung,
- Fig. 15: eine perspektivische Darstellung eines Halteverbindungselementes der zweiten Ständervorrichtung,
- Fig. 16: eine perspektivische Darstellung eines Zentralverbindungselementes der Ständereinrichtung,
- Fig. 17 bis Fig. 19: perspektivische Darstellungen unterschiedlicher Teile der ersten Nutzfahrzeuganordnung während seiner Montage.

Die nachfolgend erläuterten Merkmale der erfindungsgemäßen Ausführungsbeispiele können auch einzeln oder in anderen Kombinationen als dargestellt oder beschrieben Gegenstand der Erfindung sein. Teilweise sind einzelne Bauteile geschnitten oder nicht dargestellt, um erläuterte Merkmale besser erkennen zu können. Sofern sinnvoll, sind funktional gleichwirkende Teile mit identischen Bezugsziffern versehen.

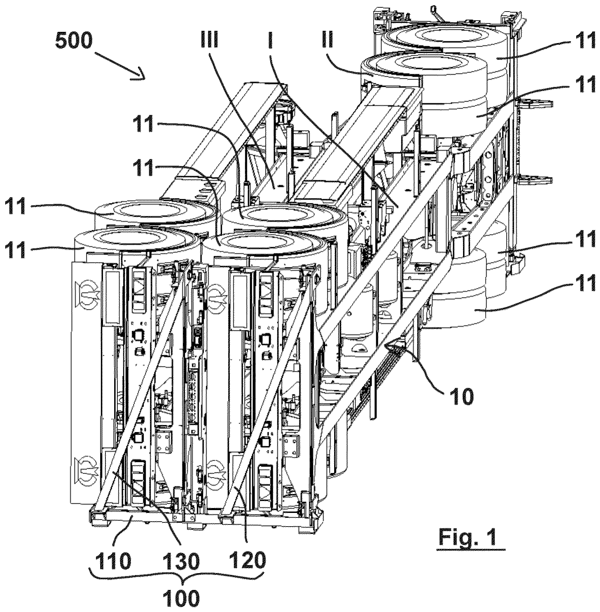

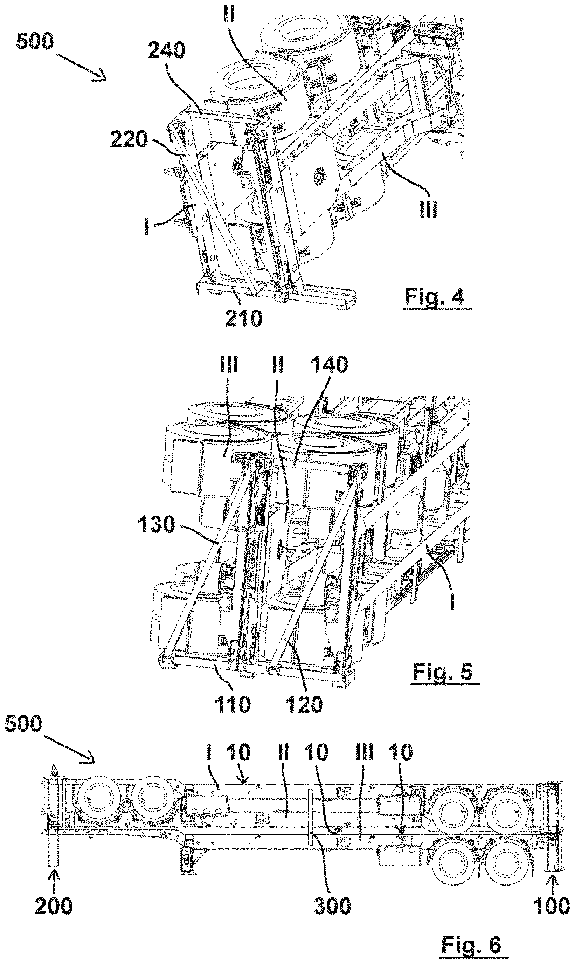

Die Nutzfahrzeuganordnung 500 gemäß Fig. 1 umfasst wie auch die weiteren dargestellten Nutzfahrzeuganordnungen 500 eine Ständereinrichtung 400 und drei Nutzfahrzeuge I, II, III. Die Ständereinrichtung 400 umfasst eine erste Ständervorrichtung 100 und eine zweite Ständervorrichtung 200. Die Nutzfahrzeuge I, II, III sind gleichartig ausgebildet und weisen jeweils zwei Fahrwerksachsen mit je zwei doppelt bereiften Rädern 11 auf. Die Nutzfahrzeuge I, II, III sind als Containerchassis ausgebildet. Die Nutzfahrzeuge I, II, III bilden jeweils eine Ladefläche 10 aus (sh. Fig. 6), auf die im Betrieb der Nutzfahrzeuge I, II, III Überseecontainer aufzusetzen sind.

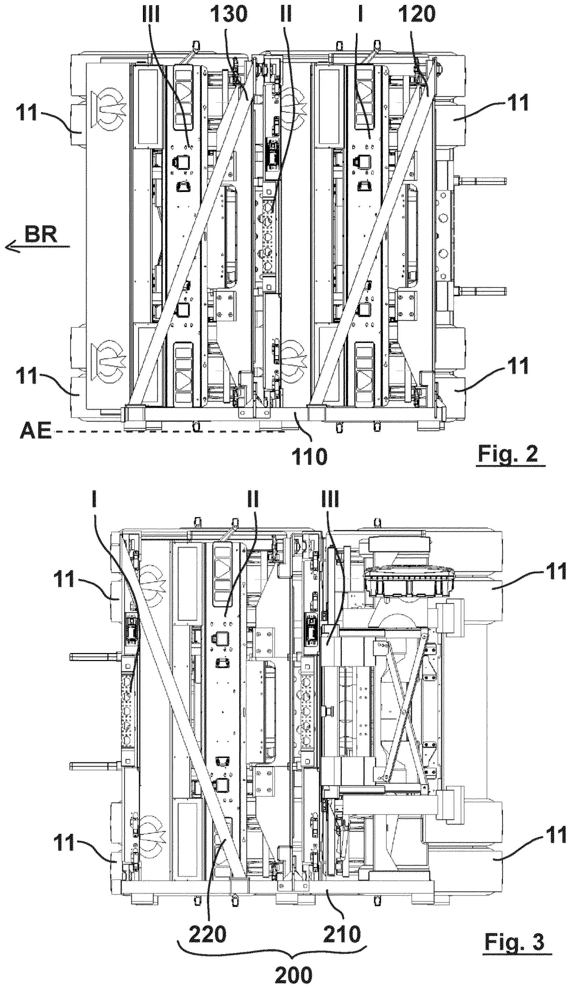

Die erste Ständervorrichtung 100 der Nutzfahrzeuganordnung 400 gem. Fig. 1 ist aus einem Fußelement 110 und zwei Halteelementen 120, 130 ausgebildet. Die zweite Ständervorrichtung 200 der Nutzfahrzeuganordnung 400 gem. Fig. 1 ist von einem Fußelement 210 und einem Halteelement 220 ausgebildet (sh. Fig. 2 und Fig. 3). Die Halteelemente 120, 130, 220 sind lösbar mit dem jeweiligen Fußelement 110, 210 verbunden.

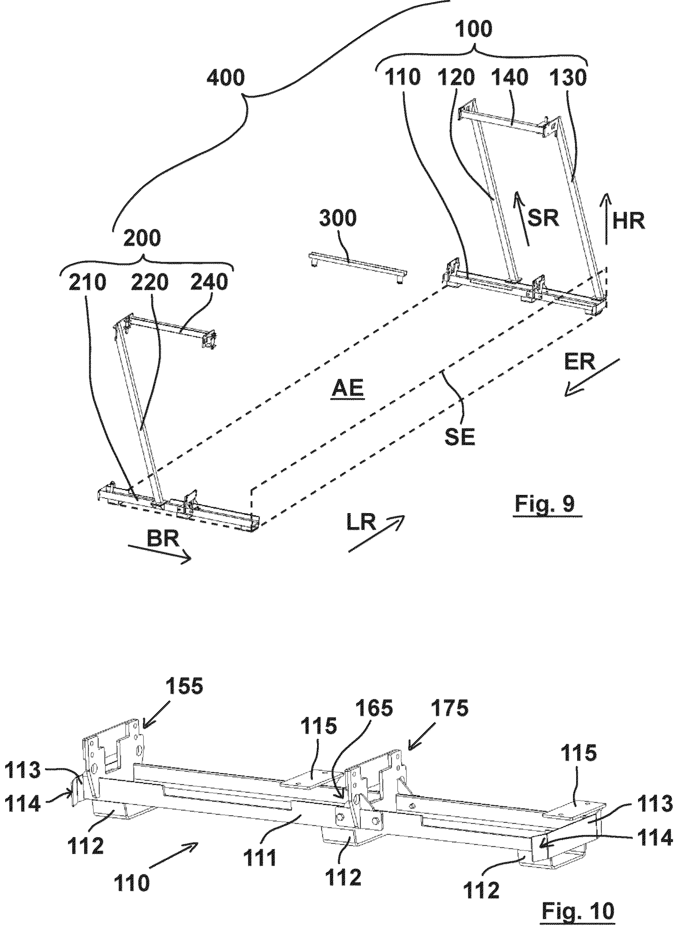

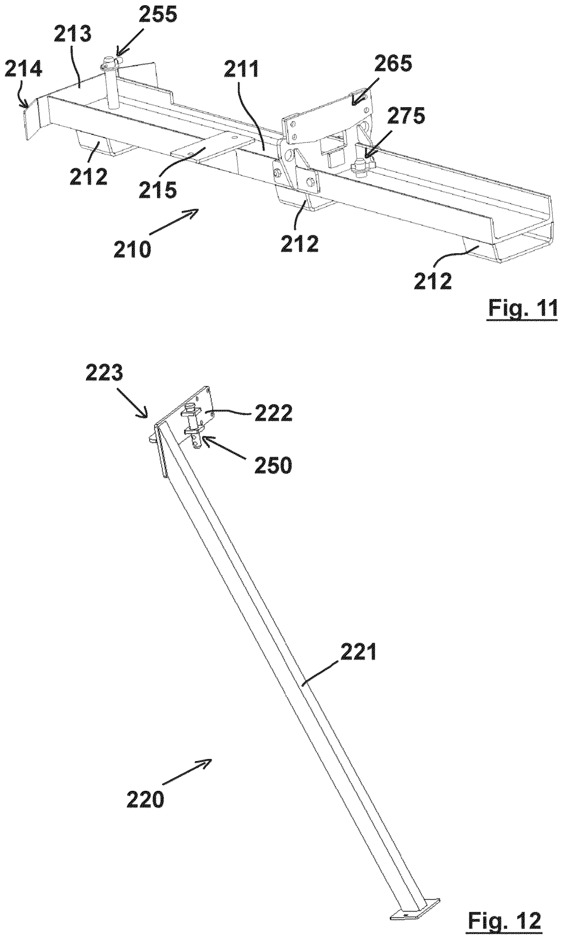

Die Nutzfahrzeuganordnung 400 steht mit den beiden Fußelementen 110, 210 auf einer Aufstandsebene AE auf. Hierzu weisen die Fußelemente 110, 210 je drei Gleitelemente 112, 212 auf, die an die Aufstandsebene AE angrenzen (vgl. Fig. 10 und Fig. 11). Die Gleitelement 112 und 212 sind in eine Breitenrichtung BR voneinander beabstandet. Außerdem sind die Gleitelemente 112, 212 an einem Fußträgerelement 111, 211 des jeweiligen Fußelementes 100, 200 angeordnet. Das Fußträgerelement 111, 211 erstreckt sich länglich in die Breitenrichtung BR.

An einem Ende des Fußträgerelementes 211 ist ein Führungselement 213 angeordnet, wobei optional an beiden Enden des Fußträgerelementes 211 je ein Führungselement 213 angeordnet ist. An beiden Enden des Fußträgerelementes 111 ist je ein Führungselement 113 angeordnet. Die Führungselemente 113, 213 weisen jeweils eine vom jeweiligen Fußträgerelement 111, 211 abgewandte Führungsfläche 114 auf. Mit der Führungsfläche 114, 214 grenzt das jeweilige Fußelement 110, 210 an Seitenebenen SE an, die sich rechtwinklig zur Breitenrichtung BR erstrecken (vgl. exemplarisch Fig. 9). Die Führungsflächen 114, 214 erstrecken sich zumindest abschnittsweise um weniger als 90° angewinkelt zur Seitenebene SE, an die sie angrenzen. Die Fußelemente 110, 210 weisen pro Halteelement 120, 130, 220 ein Haltelementaufnahmeelement 115, 215 auf, an dem das jeweilige Halteelement 120, 130, 220 anliegt. Die Haltelementaufnahmeelemente 115, 215 stehen in eine Längsrichtung LR vom Fußträgerelement 111, 211 ab. Die Längsrichtung LR ist rechtwinklig zur Breitenrichtung BR und parallel zur Aufstandsebene AE orientiert.

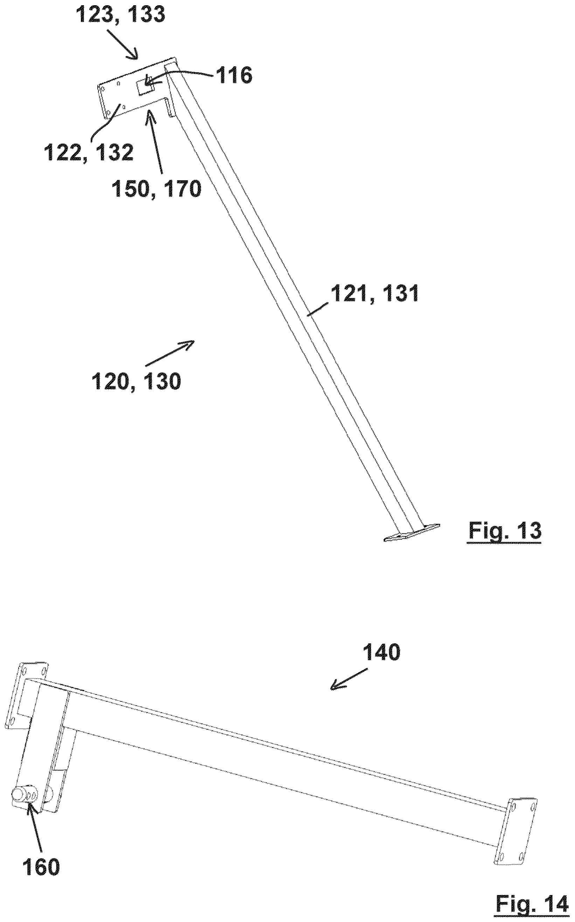

Die Halteelemente 120, 130, 220 stehen vom jeweiligen Fußelement 110, 210 in eine Ständerrichtung SR ab. Die Ständerrichtung SR ist um weniger als 90° zur Aufstandsebene AE angewinkelt. Die Haltelemente 120, 130, 220 weisen je ein Halteträgerelement 121, 131, 221 und ein Nutzfahrzeugaufnahmeelement 122, 132, 222 auf (sh. Fig. 12 und 13). Die Halteträgerelemente 121, 131, 221 erstrecken sich länglich in die Ständerrichtung SR. Die Nutzfahrzeugaufnahmeelemente 122, 132, 222 stehen in die bzw. entgegen die Längsrichtung LR vom jeweiligen Halteträgerelement 121, 131, 221 ab.

Die dargestellten Nutzfahrzeuganordnungen 500 zeichnen sich dadurch aus, dass die Nutzfahrzeuge I, II, III jeweils in einer Hochkantstellung an der Ständereinrichtung 400 fixiert sind. In der Hochkantstellung sind die Nutzfahrzeuge I, II, III auf die Seite gekippt angeordnet, so dass ihre Ladefläche 10 sich rechtwinklig zur Aufstandsebene AE erstreckt. Das erste Nutzfahrzeug I und das dritte Nutzfahrzeug III sind gleich ausgerichtet. Das bedeutet, dass ihre durch ihren Aufbau vorgegebene Fahrtrichtung identisch ist. Das zweite Nutzfahrzeug II ist derart gegensinnig ausgerichtet, dass seine Fahrtrichtung den vorbeschriebenen Fahrtrichtungen entgegengesetzt ist. Der Begriff Fahrtrichtung meint dabei die Hauptfahrtrichtung, in die die Nutzfahrzeuge in ihrem jeweiligen Betrieb gezogen werden, und nicht etwa eine Fortbewegungsrichtung der Nutzfahrzeuganordnung insgesamt.

Jedes der Nutzfahrzeuge I, II, III ist an jeder der Ständervorrichtungen 100, 200 mittels je zwei Nutzfahrzeugaufnahmen 150, 155, 160, 165, 170, 175, 250, 255, 260, 265, 270, 275 fixiert (vgl. insbesondere Fig. 2 und Fig. 3). Jede der Ständervorrichtungen 100, 200 bildet drei der Nutzfahrzeugaufnahmen 155, 165, 175, 255, 265, 275 durch sein jeweiliges Fußelement 110, 210 aus. Das erste Halteelement 120 der ersten Ständervorrichtung 100 bildet eine erste Nutzfahrzeugaufnahme 150 der ersten Ständervorrichtung 100 aus (sh. Fig. 13). Eine zweite, gleichartig ausgebildete Nutzfahrzeugaufnahme 155 der ersten Ständervorrichtung 100 ist zwischen der ersten Nutzfahrzeugaufnahme 150 und der Aufstandsebene AE durch das Fußelement 110 ausgebildet. Eine dritte Nutzfahrzeugaufnahme 160 der ersten Ständervorrichtung 100 wird bei der zweiten Nutzfahrzeuganordnung 500 gemäß den Fig. 4 und Fig. 5 durch ein Halteverbindungselement 140 der ersten Ständervorrichtung 100 ausgebildet (sh. Fig. 14). Das Halteverbindungselement 140 erstreckt sich länglich in die Breitenrichtung BR und ist an vom Fußelement 110 abgewandten Enden 123, 133 der Halteelemente 120, 130 der ersten Ständervorrichtung 100 angeordnet. Zwischen der dritten Nutzfahrzeugaufnahme 160 der ersten Ständervorrichtung 100 und der Aufstandsebene AE wird durch das Fußelement 110 der ersten Ständervorrichtung 100 eine vierte Nutzfahrzeugaufnahme 165 der ersten Ständervorrichtung 100 ausgebildet. Eine fünfte Nutzfahrzeugaufnahme 170 der ersten Ständervorrichtung 100 wird durch das zweite Halteelement 130 der ersten Ständervorrichtung 100 ausgebildet (sh. Fig. 13). Zwischen der fünften Nutzfahrzeugaufnahme 170 der ersten Ständervorrichtung 100 und der Aufstandsebene AE bildet das Fußelement 110 der ersten Ständervorrichtung 100 eine sechste Nutzfahrzeugaufnahme 175 aus.

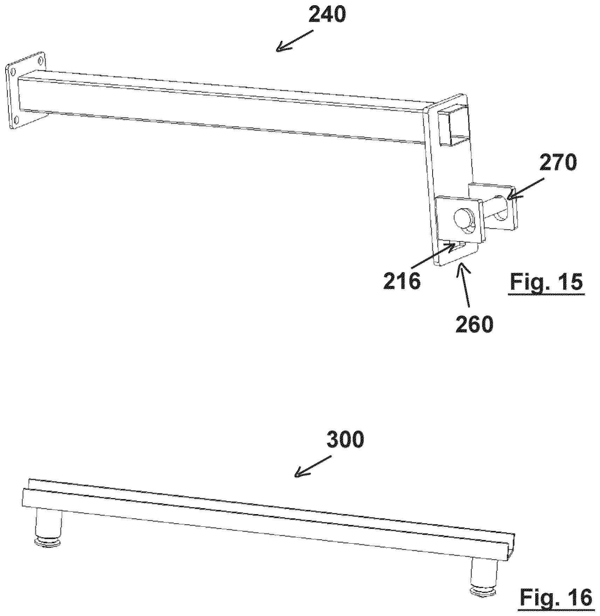

Eine erste Nutzfahrzeugaufnahme 250 der zweiten Ständervorrichtung 200 wird durch das Halteelement 220 der zweiten Ständervorrichtung 200 ausgebildet. Zwischen der ersten Nutzfahrzeugaufnahme 250 der zweiten Ständervorrichtung 200 und der Aufstandsebene AE bildet das Fußelement 210 der zweiten Ständervorrichtung 200 eine zweite Nutzfahrzeugaufnahme 255 aus. Eine dritte Nutzfahrzeugaufnahme 260 der zweiten Ständervorrichtung 200 wird durch ein Halteverbindungselement 240 der zweiten Ständervorrichtung 200 ausgebildet. Das Halteverbindungselement 240 erstreckt sich länglich in die Breitenrichtung BR und ist an einem vom Fußelement 210 der zweiten Ständervorrichtung 200 abgewandten Ende 223 des Halteelementes 220 der zweiten Ständervorrichtung 200 angeordnet (sh. Fig. 15). Zwischen der dritten Nutzfahrzeugaufnahme 260 der zweiten Ständervorrichtung 200 und der Aufstandsebene AE ist durch das Fußelement 210 der zweiten Ständervorrichtung 200 eine vierte Nutzfahrzeugaufnahme 265 ausgebildet. Das Halteverbindungselement 240 der zweiten Ständervorrichtung 200 bildet ferner eine fünfte Nutzfahrzeugaufnahme 270 der zweiten Ständervorrichtung 200 aus. Zwischen der fünften Nutzfahrzeugaufnahme 270 und der Aufstandsebene AE bildet das Fußelement 210 der zweiten Ständervorrichtung 200 eine sechste Nutzfahrzeugaufnahme 275 der zweiten Ständervorrichtung 200 aus.

Das erste Nutzfahrzeug I ist an den ersten Nutzfahrzeugaufnahmen 150, 250 und an den zweiten Nutzfahrzeugaufnahmen 155, 255 angeordnet. Das zweite Nutzfahrzeug II ist an den dritten Nutzfahrzeugaufnahmen 160, 260 und an den vierten Nutzfahrzeugaufnahmen 165, 265 angeordnet. Das dritte Nutzfahrzeug III ist an den fünften Nutzfahrzeugaufnahmen 170, 270 und an den sechsten Nutzfahrzeugaufnahmen 175, 275 fixiert.

Die Nutzfahrzeugaufnahmen 150, 155, 160, 165, 170, 175, 250, 255, 260, 265, 270, 275 sind derart ausgebildet, dass
- das zweite Nutzfahrzeug II zwischen dem ersten Nutzfahrzeug I und dem dritten Nutzfahrzeug III angeordnet ist,
- die Ladefläche 10 des ersten Nutzfahrzeuges I vom dritten Nutzfahrzeug III abgewandt ausgerichtet ist,
- die Ladefläche 10 des zweiten Nutzfahrzeuges II dem dritten Nutzfahrzeug III zugewandt ausgerichtet ist,
- die Ladefläche 10 des dritten Nutzfahrzeuges III dem zweiten Nutzfahrzeug II zugewandt ausgerichtet ist.

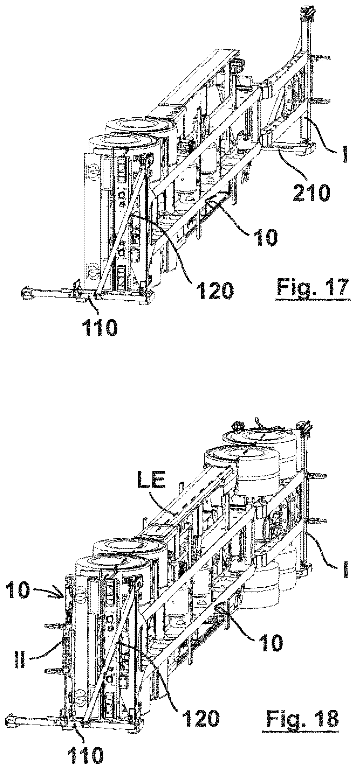

Das erste Nutzfahrzeug I und das zweite Nutzfahrzeug II greifen derart ineinander ein, dass eine zur Aufstandsebene AE rechtwinklige und sich in die Längsrichtung LR erstreckende Längsebene LE sowohl das erste Nutzfahrzeug I als auch das zweite Nutzfahrzeug II schneidet (vgl. Fig. 18).

Die erste Nutzfahrzeugaufnahme 150, die zweite Nutzfahrzeugaufnahme 155, die fünfte Nutzfahrzeugaufnahme 170 und die sechste Nutzfahrzeugaufnahme 175 der ersten Ständervorrichtung 100 und die dritte Nutzfahrzeugaufnahme 260 und die vierte Nutzfahrzeugaufnahme 265 der zweiten Ständervorrichtung 200 sind zumindest im Wesentlichen gleichartig ausgebildet. Sie dienen jeweils zur Fixierung eines Hecks des jeweiligen Nutzfahrzeuges I, II, III. Sie sind jeweils durch eine in die Breitenrichtung BR durchgehende Aufnahmeausnehmung 116, 216 ausgebildet, die sich in die Längsrichtung LR länglich erstreckt.

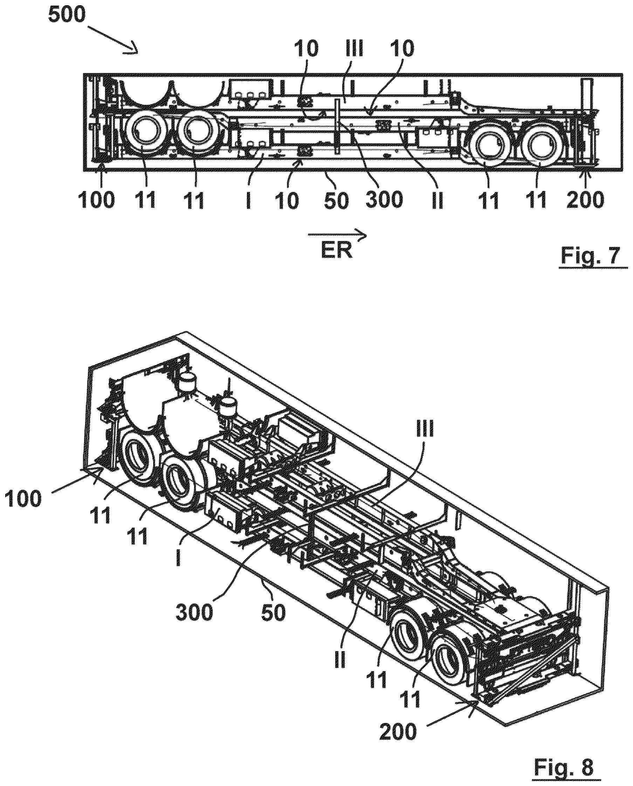

Die dritte Nutzfahrzeugaufnahme 160 und die vierte Nutzfahrzeugaufnahme 165 der ersten Ständervorrichtung 100 und die erste Nutzfahrzeugaufnahme 250, die zweite Nutzfahrzeugaufnahme 255, die fünfte Nutzfahrzeugaufnahme 270 und die sechste Nutzfahrzeugaufnahme 275 der zweiten Ständervorrichtung 200 sind abweichend ausgebildet. Sie dienen zur Fixierung einer Front der Nutzfahrzeuge I, II, III. Sie sind jeweils durch ein Bolzenelement ausgebildet, das sich länglich in eine Hochrichtung HR erstreckt, die rechtwinklig zur Aufstandsebene AE ausgerichtet ist. Neben der ersten Ständervorrichtung 100 und der zweiten Ständervorrichtung 200 umfasst die Ständereinrichtung 400 gem. Fig. 9 noch ein Zentralverbindungselement 300 (sh. Fig. 16). Das Zentralverbindungselement 300 dient zur Befestigung des ersten Nutzfahrzeuges I an dem dritten Nutzfahrzeug III. Die Nutzfahrzeuganordnung 500 gem. den Fig. 7 und Fig. 8 umfasst einen Container 50. Dabei handelt es sich um einen 45'-High-Cube-Überseecontainer. Der Container 50 umgibt die Ständereinrichtung 400 gem. Fig. 9 und die drei Nutzfahrzeuge I, II, III.

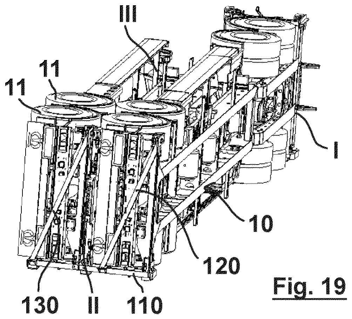

Die Fig. 17 bis Fig. 19 veranschaulichen das Verfahren zur Herstellung einer erfindungsgemäßen Nutzfahrzeuganordnung 500. Zunächst wird das erste Nutzfahrzeug I auf die Fußelemente 110, 210 aufgesetzt und anschließend mit den Halteelementen 120, 220 fixiert. Anschließend wird das zweite Nutzfahrzeug II auf die Fußelemente 110, 210 aufgesetzt und fixiert. Anschließend wird das dritte Nutzfahrzeug III auf die Fußelemente 110, 210 aufgesetzt und mittels des zweiten Halteelementes 130 der ersten Ständervorrichtung 100 fixiert. Die Nutzfahrzeuge I, II, III werden dabei auf die Fußelemente 110, 210 aufgesetzt, bevor die das jeweilige Nutzfahrzeug I, II, III haltenden Halteelemente 120, 130, 220 mit dem jeweiligen Fußelement 110, 210 verbunden werden. Die Halteverbindungselemente 140, 240 werden nach der Verbindung der Halteelemente 120, 130, 220 mit den Fußelementen 110, 210 montiert. Bevor oder nachdem die Nutzfahrzeuganordnung 500 gem. Fig. 19 hergestellt ist, werden optional die Räder 11 des dritten Nutzfahrzeuges III demontiert und die Nutzfahrzeuganordnung 500 in den Container 50 in eine Einschubrichtung ER (vgl. Fig. 7), die der Längsrichtung LR entgegengesetzt ist, eingeschoben und im Container 50 fixiert.

### Bezugszeichenliste:

- 10: Ladefläche
- 11: Rad
- 50: Container
- 100: erste Ständervorrichtung
- 110: Fußelement der ersten Ständervorrichtung
- 111: Fußträgerelement des Fußelementes der ersten Ständervorrichtung
- 112: Gleitelement des Fußelementes der ersten Ständervorrichtung
- 113: Führungselement des Fußelementes der ersten Ständervorrichtung
- 114: Führungsfläche des Fußelementes der ersten Ständervorrichtung
- 115: Halteelementaufnahmeelement des Fußelementes der ersten Ständervorrichtung
- 116: Aufnahmeausnehmung der ersten Ständervorrichtung
- 120: erstes Halteelement der ersten Ständervorrichtung
- 121: Halteträgerelement des ersten Halteelementes der ersten Ständervorrichtung
- 122: Nutzfahrzeugaufnahmeelement des ersten Halteelementes der ersten Ständervorrichtung
- 123: vom Fußelement abgewandtes Ende des ersten Halteelementes der ersten Ständervorrichtung
- 130: zweites Halteelement der ersten Ständervorrichtung
- 131: Halteträgerelement des zweiten Halteelementes der ersten Ständervorrichtung
- 132: Nutzfahrzeugaufnahmeelement des zweiten Halteelementes der ersten Ständervorrichtung
- 133: vom Fußelement abgewandtes Ende des zweiten Halteelementes der ersten Ständervorrichtung
- 140: Halteverbindungselement der ersten Ständervorrichtung
- 150: erste Nutzfahrzeugaufnahme der ersten Ständervorrichtung
- 155: zweite Nutzfahrzeugaufnahme der ersten Ständervorrichtung
- 160: dritte Nutzfahrzeugaufnahme der ersten Ständervorrichtung
- 165: vierte Nutzfahrzeugaufnahme der ersten Ständervorrichtung
- 170: fünfte Nutzfahrzeugaufnahme der ersten Ständervorrichtung
- 175: sechste Nutzfahrzeugaufnahme der ersten Ständervorrichtung
- 200: zweite Ständervorrichtung
- 210: Fußelement der zweiten Ständervorrichtung
- 211: Fußträgerelement des Fußelementes der zweiten Ständervorrichtung
- 212: Gleitelement des Fußelementes der zweiten Ständervorrichtung
- 213: Führungselement des Fußelementes der zweiten Ständervorrichtung
- 214: Führungsfläche des Fußelementes der zweiten Ständervorrichtung
- 215: Halteelementaufnahmeelement des Fußelementes der zweiten Ständervorrichtung
- 216: Aufnahmeausnehmung der zweiten Ständervorrichtung
- 220: Halteelement der zweiten Ständervorrichtung
- 221: Halteträgerelement des Halteelementes der zweiten Ständervorrichtung
- 222: Nutzfahrzeugaufnahmeelement des Halteelementes der zweiten Ständervorrichtung
- 223: vom Fußelement abgewandtes Ende des Halteelementes des Halteelementes der zweiten Ständervorrichtung
- 240: Halteverbindungselement der zweiten Ständervorrichtung
- 250: erste Nutzfahrzeugaufnahme der zweiten Ständervorrichtung
- 255: zweite Nutzfahrzeugaufnahme der zweiten Ständervorrichtung
- 260: dritte Nutzfahrzeugaufnahme der zweiten Ständervorrichtung
- 265: vierte Nutzfahrzeugaufnahme der zweiten Ständervorrichtung
- 270: fünfte Nutzfahrzeugaufnahme der zweiten Ständervorrichtung
- 275: sechste Nutzfahrzeugaufnahme der zweiten Ständervorrichtung
- 300: Zentralverbindungselement
- 400: Ständereinrichtung
- 500: Nutzfahrzeuganordnung
- I: erstes Nutzfahrzeug
- II: zweites Nutzfahrzeug
- III: drittes Nutzfahrzeug
- AE: Aufstandsebene
- SE: Seitenebene
- LE: Längsebene
- ER: Einschubrichtung
- SR: Ständerrichtung
- BR: Breitenrichtung
- LR: Längsrichtung
- HR: Hochrichtung

## Patentansprüche

1. Ständervorrichtung (100, 200) zum Halten von zumindest zwei Nutzfahrzeugen (I, II, III), aufweisend ein an eine Aufstandsebene (AE) angrenzendes Fußelement (110, 210) und ein erstes Halteelement (120, 220), das vom Fußelement (110, 210) in eine zur Aufstandsebene (AE) angewinkelte Ständerrichtung (SR) absteht und eine erste Nutzfahrzeugaufnahme (150, 250) ausbildet, die zur Fixierung eines ersten Nutzfahrzeuges (I) in einer Hochkantstellung, in der eine Ladefläche (10) des ersten Nutzfahrzeuges (I) zur Aufstandsebene (AE) angewinkelt angeordnet ist, an der Ständervorrichtung (100, 200) ausgebildet ist,
**gekennzeichnet durch** eine weitere Nutzfahrzeugaufnahme (160, 165, 170, 175, 260, 265, 270, 275), die zur Fixierung eines weiteren Nutzfahrzeuges (II, III) in der Hochkantstellung an der Ständervorrichtung (100, 200) ausgebildet ist und derart relativ zur ersten Nutzfahrzeugaufnahme (150, 250) in eine zur Aufstandsebene (AE) parallele Breitenrichtung (BR) versetzt angeordnet ist, dass die Ladefläche (10) des ersten Nutzfahrzeuges (I) vom weiteren Nutzfahrzeug (II, III) abgewandt ausgerichtet ist.

2. Ständervorrichtung nach Anspruch 1, **dadurch gekennzeichnet, dass** die weitere Nutzfahrzeugaufnahme (160, 165, 260, 265) derart zur Fixierung des weiteren Nutzfahrzeuges (II) ausgebildet ist, dass eine Ladefläche (10) des weiteren Nutzfahrzeuges (II) vom ersten Nutzfahrzeug (I) abgewandt ausgerichtet ist.

3. Ständervorrichtung nach Anspruch 1, **dadurch gekennzeichnet, dass** die weitere Nutzfahrzeugaufnahme (170, 175, 270, 275) derart zur Fixierung des weiteren Nutzfahrzeuges (III) ausgebildet ist, dass eine Ladefläche (10) des weiteren Nutzfahrzeuges (III) dem ersten Nutzfahrzeug (I) zugewandt ausgerichtet ist.

4. Ständervorrichtung nach einem der vorhergehenden Ansprüche, **gekennzeichnet durch** zwei weitere Nutzfahrzeugaufnahmen (160, 165, 170, 175, 260, 265, 270, 275), die zur Fixierung zweier weiterer Nutzfahrzeuge (II, III) in der Hochkantstellung an der Ständervorrichtung (100, 200) ausgebildet sind und relativ zur ersten Nutzfahrzeugaufnahme (150, 250) und relativ zueinander in die Breitenrichtung (BR) versetzt angeordnet sind.

5. Ständervorrichtung nach einem der vorhergehenden Ansprüche, **dadurch gekennzeichnet, dass** das Fußelement (110, 210) ein sich zumindest so weit länglich in die Breitenrichtung (BR) erstreckendes Fußträgerelement (111, 211) aufweist, wie die erste Nutzfahrzeugaufnahme (150, 250) und die weitere Nutzfahrzeugaufnahme (160, 165, 170, 175, 260, 265, 270, 275) in die Breitenrichtung (BR) voneinander beabstandet sind.

6. Ständervorrichtung nach Anspruch 5, **dadurch gekennzeichnet, dass** das Fußelement (110, 210) zumindest zwei, insbesondere drei, in die Breitenrichtung (BR) voneinander beabstandete, vom Fußträgerelement (111, 211) abstehende und an die Aufstandsebene (AE) angrenzende Gleitelemente (112, 212) aufweist.

7. Ständervorrichtung nach Anspruch 5 oder 6, **dadurch gekennzeichnet, dass** das Fußelement (110, 210) zumindest an einem Ende des Fußträgerelementes (111, 211) ein Führungselement (113, 213) aufweist, das mit einer von dem Fußträgerelement (111, 211) abgewandten Führungsfläche (114, 214) an eine sich zur Breitenrichtung (BR) rechtwinklig erstreckende Seitenebene (SE) angrenzt, wobei die Führungsfläche (114, 214) sich zumindest abschnittsweise um weniger als 90° angewinkelt zur Seitenebene (SE) erstreckt.

8. Ständervorrichtung nach einem der vorhergehenden Ansprüche, **dadurch gekennzeichnet, dass** das Fußelement (110, 210) eine zweite Nutzfahrzeugaufnahme (155, 255) ausbildet, die zur Fixierung des ersten Nutzfahrzeuges (I) in der Hochkantstellung an der Ständervorrichtung (100, 200) ausgebildet ist und zwischen der ersten Nutzfahrzeugaufnahme (150, 250) und der Aufstandsebene (AE) von einer die erste Nutzfahrzeugaufnahme (150, 250) schneidenden und zur Aufstandsebene (AE) rechtwinkligen Geraden geschnitten wird.

9. Ständervorrichtung nach Anspruch 8, **dadurch gekennzeichnet, dass** das Fußelement (110, 210) zwei weitere, relativ zur zweiten Nutzfahrzeugaufnahme (155, 255) in die Breitenrichtung versetzt angeordnete Nutzfahrzeugaufnahmen (165, 175, 265, 275) ausbildet, die zur Fixierung eines zweiten Nutzfahrzeuges (II) in der Hochkantstellung und eines dritten Nutzfahrzeuges (III) in der Hochkantstellung an der Ständervorrichtung (100, 200) ausgebildet sind.

10. Ständervorrichtung nach einem der vorhergehenden Ansprüche, **dadurch gekennzeichnet, dass** das Fußelement (110, 210) ein Halteelementaufnahmeelement (115, 215) aufweist, an dem das erste Halteelement (120, 220) anliegt und das in eine Längsrichtung (LR), die rechtwinklig zur Breitenrichtung (BR) und parallel zur Aufstandsebene (AE) orientiert ist, vom Fußträgerelement (111, 211) absteht.

11. Ständervorrichtung nach einem der vorhergehenden Ansprüche, **dadurch gekennzeichnet, dass** das erste Halteelement (120, 220) ein sich länglich in die um weniger als 90°, insbesondere um weniger als 80°, zur Aufstandsebene (AE) angewinkelte Ständerrichtung (SR) erstreckendes Halteträgerelement (121, 221) umfasst.

12. Ständervorrichtung nach Anspruch 11, **dadurch gekennzeichnet, dass** das erste Halteelement (120, 220) ein in die Längsrichtung (LR) vom Halteträgerelement (121, 221) abstehendes Nutzfahrzeugaufnahmeelement (122, 222) zur Ausbildung der ersten Nutzfahrzeugaufnahme (150, 250) umfasst.

13. Ständervorrichtung nach einem der vorhergehenden Ansprüche, **gekennzeichnet durch** eine in die Breitenrichtung (BR) durchgehende Aufnahmeausnehmung (116, 216) zur Ausbildung der ersten Nutzfahrzeugaufnahme (150) oder der weiteren Nutzfahrzeugaufnahme (260, 265, 170, 175).

14. Ständervorrichtung nach Anspruch 13, **dadurch gekennzeichnet, dass** die Aufnahmeausnehmung (116, 216) in die Längsrichtung (LR) länglich ausgebildet ist.

15. Ständervorrichtung nach einem der vorhergehenden Ansprüche, **gekennzeichnet durch** ein sich länglich in eine zur Aufstandsebene (AE) rechtwinklige Hochrichtung (HR) erstreckendes Bolzenelement zur Ausbildung der ersten Nutzfahrzeugaufnahme (250) oder der weiteren Nutzfahrzeugaufnahme (160, 165, 270, 275).

16. Ständervorrichtung nach einem der vorhergehenden Ansprüche, **gekennzeichnet durch** ein zweites Halteelement (130), das relativ zum ersten Halteelement (120) in die Breitenrichtung versetzt angeordnet ist und das vom Fußelement (110) in eine zur Aufstandsebene (AE) angewinkelte Richtung (SR) absteht und die weitere Nutzfahrzeugaufnahme (160, 170) ausbildet.

17. Ständervorrichtung nach Anspruch 16, **dadurch gekennzeichnet, dass** das zweite Halteelement (130) die gleiche Form wie das erste Halteelement (120) hat.

18. Ständervorrichtung nach einem der vorhergehenden Ansprüche, **gekennzeichnet durch** ein an einem vom Fußelement (110) abgewandten Ende (123, 223) des ersten Halteelementes (120, 220) angeordnetes und sich länglich in die Breitenrichtung (BR) erstreckendes Halteverbindungselement (140, 240).

19. Ständervorrichtung nach Anspruch 18, **dadurch gekennzeichnet, dass** das Halteverbindungselement (140, 240) die weitere Nutzfahrzeugaufnahme (160, 260) ausbildet.

20. Ständervorrichtung nach einem Anspruch 16 oder 17 und 18 oder 19, **dadurch gekennzeichnet, dass** das Halteverbindungselement (140) an einem vom Fußelement (110) abgewandten Ende (133) des zweiten Halteelementes (130) angeordnet ist.

21. Ständervorrichtung nach Anspruch 20, **dadurch gekennzeichnet, dass** das Halteverbindungselement (140) an Nutzfahrzeugaufnahmeelementen (122, 132) der beiden Halteelemente (120, 130) angeordnet ist.

22. Ständereinrichtung (400) aufweisend eine erste Ständervorrichtung (100) nach Anspruch 16 und eine zweite, relativ zur ersten Ständervorrichtung (100) in die Längsrichtung (LR) versetzt angeordnete Ständervorrichtung (200) nach Anspruch 19.

23. Ständereinrichtung nach Anspruch 22, **gekennzeichnet durch** ein Zentralverbindungselement (300), das zur Befestigung des ersten Nutzfahrzeuges (I) an dem dritten Nutzfahrzeug (III) ausgebildet ist.

24. Nutzfahrzeuganordnung umfassend zumindest eine Ständervorrichtung (100, 200) nach einem der Ansprüche 1 bis 21, insbesondere eine Ständereinrichtung (400) nach Anspruch 22 oder 23, zumindest ein erstes Nutzfahrzeug (I), das mittels der ersten Nutzfahrzeugaufnahme (150, 250) und insbesondere mittels der zweiten Nutzfahrzeugaufnahme (155, 255) in der Hochkantstellung an der Ständervorrichtung (100, 200) fixiert ist, und zumindest ein weiteres oder zweites Nutzfahrzeug (II, III), das mittels einer dritten Nutzfahrzeugaufnahme (160, 260) und insbesondere mittels einer vierten Nutzfahrzeugaufnahme (165, 265) in der Hochkantstellung an der Ständervorrichtung (100, 200) fixiert ist, wobei die Ladefläche (10) des ersten Nutzfahrzeuges (I) vom weiteren oder zweiten Nutzfahrzeug (II, III) abgewandt ausgerichtet ist.

25. Nutzfahrzeuganordnung nach Anspruch 24, **dadurch gekennzeichnet, dass** das weitere oder zweite Nutzfahrzeug (II) derart mittels der dritten Nutzfahrzeugaufnahme (160, 260) fixiert ist, dass eine Ladefläche (10) des weiteren oder zweiten Nutzfahrzeuges (II) vom ersten Nutzfahrzeug (I) abgewandt ausgerichtet ist.

26. Nutzfahrzeuganordnung nach Anspruch 25, **dadurch gekennzeichnet, dass** das erste Nutzfahrzeug (I) und das weitere oder zweite Nutzfahrzeug (II) derart ineinander eingreifend fixiert sind, dass eine zur Aufstandsebene (AE) rechtwinklige und sich in die Längsrichtung (LR) erstreckende Längsebene (LE) das erste Nutzfahrzeug (I) und das weitere oder zweite Nutzfahrzeug (II) schneidet.

27. Nutzfahrzeuganordnung nach einem der Ansprüche 24 bis 26, **gekennzeichnet durch** ein drittes Nutzfahrzeug (III), das mittels einer fünften Nutzfahrzeugaufnahme (170, 270) und insbesondere mittels einer sechsten Nutzfahrzeugaufnahme (175, 275) derart in der Hochkantstellung an der Ständervorrichtung (100, 200) fixiert ist, dass eine Ladefläche (10) des dritten Nutzfahrzeuges (III) dem ersten Nutzfahrzeug (I) und/oder dem weiteren oder zweiten Nutzfahrzeug (II) zugewandt ausgerichtet ist.

28. Nutzfahrzeuganordnung nach einem der Ansprüche 24 bis 27, **gekennzeichnet durch** einen Container (50), der die zumindest eine Ständervorrichtung (100, 200), insbesondere die Ständereinrichtung (400), das erste Nutzfahrzeug (I) und das weitere oder zweite Nutzfahrzeug (II) umschließt.

29. Nutzfahrzeuganordnung nach einem der Ansprüche 24 bis 28, **dadurch gekennzeichnet, dass** das erste Nutzfahrzeug (I) heckseitig an der ersten Ständervorrichtung (100) und frontseitig an der zweiten Ständervorrichtung (200) fixiert ist, das weitere oder zweite Nutzfahrzeug (II) frontseitig an der ersten Ständervorrichtung (100) und heckseitig an der zweiten Ständervorrichtung (200) fixiert ist und insbesondere das dritte Nutzfahrzeug (III) heckseitig an der ersten Ständervorrichtung (100) und frontseitig an der zweiten Ständervorrichtung (200) fixiert ist.

30. Nutzfahrzeuganordnung nach einem der Ansprüche 24 bis 29, **dadurch gekennzeichnet, dass** es sich bei den Nutzfahrzeugen (I, II, III) um Sattelauflieger, insbesondere als Containerchassis ausgebildete Sattelauflieger, handelt.

31. Nutzfahrzeuganordnung nach einem der Ansprüche 24 bis 30, **dadurch gekennzeichnet, dass** zumindest das erste Nutzfahrzeug (I) und das zweite Nutzfahrzeug (II) jeweils genau zwei Fahrzeugachsen aufweisen.

32. Verfahren zur Ausbildung einer Nutzfahrzeuganordnung nach einem der Ansprüche 24 bis 31, **gekennzeichnet durch** die Schritte:
- Fixieren eines ersten Nutzfahrzeuges (I) an einer ersten Ständervorrichtung (100) gemäß Anspruch 1 mittels der ersten Nutzfahrzeugaufnahme (150) der ersten Ständervorrichtung (100),
- Fixieren des ersten Nutzfahrzeuges (I) an einer zweiten Ständervorrichtung (200) gemäß Anspruch 1 mittels der ersten Nutzfahrzeugaufnahme (250) der zweiten Ständervorrichtung (200),
- Fixieren eines zweiten Nutzfahrzeuges (II) an der ersten Ständervorrichtung (100) gemäß Anspruch 1 mittels einer weiteren Nutzfahrzeugaufnahme (165) der ersten Ständervorrichtung (100),
- Fixieren des zweiten Nutzfahrzeuges (II) an der zweiten Ständervorrichtung (200) gemäß Anspruch 1 mittels einer weiteren Nutzfahrzeugaufnahme (265) der zweiten Ständervorrichtung (200).

33. Verfahren nach Anspruch 32, **dadurch gekennzeichnet, dass** das erste Halteelement (220) der zweiten Ständervorrichtung (200) mit dem Fußelement (210) der zweiten Ständervorrichtung (200) verbunden wird, nachdem das erste Nutzfahrzeug (I) mittels der zweiten Nutzfahrzeugaufnahme (255) der zweiten Ständervorrichtung (200) fixiert wurde.

34. Verfahren nach Anspruch 32 oder 33, **dadurch gekennzeichnet, dass** das zweite Halteelement (130) der ersten Ständervorrichtung (100) mit dem Fußelement (110) der ersten Ständervorrichtung (100) verbunden wird, nachdem das erste Nutzfahrzeug (I) mittels der ersten Nutzfahrzeugaufnahme (150) der ersten Ständervorrichtung (100) fixiert wurde.

35. Verfahren nach einem der Ansprüche 32 bis 34, **dadurch gekennzeichnet, dass** das Halteverbindungselement (140) der ersten Ständervorrichtung (100) mit dem ersten Halteelement (120) der ersten Ständervorrichtung (100) und dem zweiten Halteelement (130) der ersten Ständervorrichtung (100) verbunden wird, nachdem das erste Nutzfahrzeug (I) mittels der ersten Nutzfahrzeugaufnahme (150) der ersten Ständervorrichtung (100) und das zweite Nutzfahrzeug (II) mittels der weiteren Nutzfahrzeugaufnahme (165) der ersten Ständervorrichtung (100) fixiert wurde.

36. Verfahren nach einem der Ansprüche 32 bis 35, **dadurch gekennzeichnet, dass** das Halteverbindungselement (240) der zweiten Ständervorrichtung (200) mit dem ersten Halteelement (220) der zweiten Ständervorrichtung (200) verbunden wird, nachdem das erste Nutzfahrzeug (I) mittels der ersten Nutzfahrzeugaufnahme (250) der zweiten Ständervorrichtung (200) und das zweite Nutzfahrzeug (II) mittels der weiteren Nutzfahrzeugaufnahme (265) der zweiten Ständervorrichtung (200) fixiert wurde.

37. Verfahren nach einem der Ansprüche 32 bis 36, **gekennzeichnet durch** eine Demontage zumindest der Räder (11) des dritten Nutzfahrzeuges (III).

38. Verfahren nach einem der Ansprüche 32 bis 37, **gekennzeichnet durch** ein Schieben der fixierten Nutzfahrzeuge (I, II, III) in die Längsrichtung (LR) in einen Container (50).

39. Verfahren nach einem der Ansprüche 32 bis 38, **gekennzeichnet durch** ein Verspannen der fixierten Nutzfahrzeuge (I, II, III) und/oder zumindest einer der Ständervorrichtungen (100, 200) am Container (50) mittels zumindest eines Spannmittels.
